# EUROPEAN PATENT APPLICATION

(11) **EP 4 841 813 A1**
(43) Date of publication of application: **18.11.2026**
(21) Application number: 25767373.1
(22) Date of filing: 04.03.2025
(51) Int. Cl.: H01M 50/569

(54) **BATTERY AND ELECTRICAL DEVICE**

(30) Priority: 05.03.2024 CN 202420422996 U
(71) Applicant: Contemporary Amperex Technology Co., Limited, Ningde, Fujian 352100 (CN)
(72) Inventor: LIU, Shaozhong, Ningde, Fujian 352100 (CN); GAN, Weifeng, Ningde, Fujian 352100 (CN); WANG, Yu, Ningde, Fujian 352100 (CN); KANG, Hairong, Ningde, Fujian 352100 (CN); CHEN, Qicai, Ningde, Fujian 352100 (CN)
(74) Representative: Kraus & Lederer PartGmbB
(86) International application number: PCT/CN2025/080561
(87) International publication number: WO 2025/185635

(57) **Abstract**

The present application discloses a battery and an electrical device. The battery comprises cells, a temperature sampling member, a circuit board, and an electrical connecting member; the temperature sampling member is used for collecting the temperature of the cells; the battery further comprises an electrical connecting member; the electrical connecting member is used for being electrically connected to the temperature sampling member and the circuit board; and the temperature sampling member and the circuit board are welded to the electrical connecting member, respectively. The production efficiency of the battery can be improved.

## Description

### CROSS-REFERENCE TO RELATED APPLICATIONS

The present application claims priority to Chinese patent application 202420422996.4 filed on March 05, 2024 and entitled "BATTERY AND ELECTRICAL DEVICE", which is incorporated herein by reference by its entirety.

### TECHNICAL FIELD

The present application relates to the field of batteries, and in particular to a battery and an electrical device.

### BACKGROUND

With the development of new energy technologies, the application of batteries has become increasingly widespread. Batteries feature high energy density, high safety, long service life, and eco-friendliness for the social environment. They have been widely applied in passenger vehicles, commercial vehicles, electric bicycles, heavy-duty trucks, energy storage facilities, battery swapping stations, engineering manufacturing, intelligent apparatuses, and other fields. Meanwhile, they also boost technological development and research in communication terminals, medical devices, energy exploitation, and other fields.

As the market demand for batteries expands, how to improve the production efficiency of batteries has become an urgent technical problem to be addressed.

### SUMMARY

Embodiments of the present application provide a battery and an electrical device to effectively improve the production efficiency of the battery.

According to a first aspect, embodiments of the present application provide a battery, including a battery cell, a temperature sampling member, a circuit board, and an electrical connecting member, where the temperature sampling member is configured to detect a temperature of the battery cell; the electrical connecting member is configured to electrically connect the temperature sampling member to the circuit board, and the temperature sampling member is connected to the electrical connecting member by reflow soldering.

In the above technical solution, by adding an electrical connecting member to serve as an adapter between the temperature sampling member and the circuit board, the electrical connecting member and the temperature sampling member may be connected by reflow soldering in advance to form a component, and then the electrical connecting member is connected to the circuit board to realize the electrical connection between the temperature sampling member and the circuit board. This allows the reflow soldering step to be decoupled from the step of connecting the circuit board and the temperature sampling member, shortens the overall production cycle, and greatly improves the production efficiency of the battery.

In some embodiments, the electrical connecting member is a flexible circuit board.

In the above technical solution, the electrical connecting member is a flexible circuit board, which simplifies the preparation of the electrical connecting member.

In some embodiments, the temperature sampling member is provided with a first terminal and a second terminal; the flexible circuit board includes a first conductive member, a second conductive member, a first insulating film, and a second insulating film, where the first insulating film and the second insulating film are stacked, the first conductive member and the second conductive member are disposed between the first insulating film and the second insulating film, one end of the first conductive member is welded to the circuit board, and another end is connected to the first terminal by reflow soldering; and one end of the second conductive member is welded to the circuit board, and another end is connected to the second terminal by reflow soldering.

In the above technical solution, the first insulating film and the second insulating film wrap the first conductive member and the second conductive member, which may reduce the risk of short circuit of the battery.

In some embodiments, the first insulating film is provided with a first opening and a second opening, the first conductive member is provided with a first exposed region exposed through the first opening, and the first exposed region is welded to the circuit board; and the second conductive member is provided with a second exposed region exposed through the second opening, and the second exposed region is welded to the circuit board.

In the above technical solution, the first opening arranged on the first insulating film facilitates welding of the first conductive member to the circuit board via the first exposed region, and the second opening arranged on the first insulating film facilitates welding of the second conductive member to the circuit board via the second exposed region.

In some embodiments, the first conductive member and the circuit board are welded to form a first solder mark, the second conductive member and the circuit board are welded to form a second solder mark, and both the first solder mark and the second solder mark are coated with a first colloid.

In the above technical solution, both the first solder mark and the second solder mark are coated with a first colloid, which may lower the risk that liquid or foreign contaminants interfere with the welding position and result in temperature sampling failure.

In some embodiments, the battery further includes a busbar member and a bracket, where the busbar member is configured to realize electrical connection among a plurality of battery cells, the bracket is an insulating member, and the bracket is mounted on the busbar member; and the temperature sampling member is fixed to the bracket.

In the above technical solution, the temperature sampling member is fixed to the bracket, and the bracket is mounted on the busbar member, which is beneficial for the busbar member to fix the bracket, thereby stabilizing the temperature of the temperature sampling member, lowering the risk of displacement of the temperature sampling member, and improving the sampling quality of the temperature sampling member.

In some embodiments, the bracket is riveted to the busbar member.

In the above technical solution, the riveting of the bracket and the busbar member facilitates the assembly of the bracket and the busbar member, and the connection between the bracket and the busbar member is highly stable.

In some embodiments, a protrusion is provided on a side of the bracket facing the busbar member, and the bracket abuts against the busbar member through the protrusion.

In the above technical solution, the protrusion may lower the contact area between the bracket and the busbar member and mitigate the influence of the temperature of the busbar member on the temperature sampling member.

In some embodiments, the bracket is injection-molded at an end of the electrical connecting member where the temperature sampling member is disposed.

In the above technical solution, the bracket is injection-molded at an end of the electrical connecting member where the temperature sampling member is disposed, which facilitates the connection between the electrical connecting member and the bracket.

In some embodiments, a groove is formed on a side of the bracket facing the busbar member, and at least a portion of the temperature sampling member is accommodated in the groove.

In the above technical solution, at least a portion of the temperature sampling member is accommodated in the groove. This may reduce the protruding dimension of the temperature sampling member relative to the bracket and minimize the overall space occupied by the temperature sampling member and the bracket. In addition, this may reduce the contact between the temperature sampling member and the busbar member, so as to lower the risk that the temperature of the busbar member interferes with the temperature sampling member and generates inaccurate temperature data of the detected battery cell.

In some embodiments, the battery further includes a second colloid, and the second colloid fills the groove and covers the temperature sampling member.

In the above technical solution, the second colloid seals the temperature sampling member, which may lower the risk that liquid or foreign contaminants interfere with the temperature sampling member and cause the temperature sampling member to fail to collect the temperature of the battery cell.

In some embodiments, the bracket is disposed between the battery cell and the busbar member.

In the above technical solution, the bracket is disposed between the battery cell and the busbar member, so that the busbar member can press against the bracket to restrain the displacement of the bracket, thereby reducing the risk of sampling failure resulting from the displacement of the temperature sampling member.

In some embodiments, the battery further includes a bracket, the temperature sampling member is fixed to the bracket, and the bracket is an injection-molded plate and is located at an end of the electrical connecting member where the temperature sampling member is disposed.

In the above technical solution, the temperature sampling member is fixed to the bracket, and the bracket is mounted on the electrical connecting member, which is beneficial for the electrical connecting member to fix the bracket, thereby stabilizing the temperature of the temperature sampling member, lowering the risk of displacement of the temperature sampling member, and improving the sampling quality of the temperature sampling member.

In some embodiments, the bracket further includes a groove, and at least a portion of the temperature sampling member is accommodated in the groove.

In the above technical solution, at least a portion of the temperature sampling member is accommodated in the groove, which may reduce the protruding dimension of the temperature sampling member relative to the bracket and minimize the overall space occupied by the temperature sampling member and the bracket.

In some embodiments, the battery further includes a second colloid, and the second colloid fills the groove and covers the temperature sampling member.

In the above technical solution, the second colloid seals the temperature sampling member, which may lower the risk that liquid or foreign contaminants interfere with the temperature sampling member and cause the temperature sampling member to fail to collect the temperature of the battery cell.

In some embodiments, the battery further includes a heat conducting member, and the heat conducting member is disposed between the bracket and the battery cell.

In the above technical solution, the heat conducting member transfers heat between the battery cell and the temperature sampling member. The heat conducting member features high thermal conductivity, which may boost the heat transfer efficiency between the battery cell and the temperature sampling member and raise the accuracy of the data detected by the temperature sampling member.

According to a second aspect, embodiments of the present application provide an electrical device, where the electrical device includes the battery according to the embodiments of the first aspect, and the battery is configured to supply power to the electrical device.

### BRIEF DESCRIPTION OF DRAWINGS

In order to more clearly illustrate the technical solutions of the embodiments of the present application, the accompanying drawings required for use in the embodiments of the present application will be briefly introduced below. Obviously, the accompanying drawings described below are only some embodiments of the present application. For those of ordinary skill in the art, other drawings can be obtained based on the accompanying drawings without undertaking inventive efforts.
FIG. 1 is a schematic structural diagram of a vehicle according to some embodiments of the present application;
FIG. 2 is a schematic exploded view of a battery according to some embodiments of the present application;
FIG. 3 is a schematic exploded view of a battery according to other embodiments of the present application;
FIG. 4 is a schematic diagram of a partial structure of a battery according to some embodiments of the present application;
FIG. 5 is a schematic structural diagram of a temperature sampling member and a circuit board separately welded to an electrical connecting member according to some embodiments of the present application;
FIG. 6 is a schematic structural diagram of a temperature sampling member and an electrical connecting member according to some embodiments of the present application;
FIG. 7 is a schematic exploded view of an electrical connecting member according to some embodiments of the present application;
FIG. 8 is an enlarged view of part A in FIG. 6;
FIG. 9 is a schematic structural diagram of a circuit board in FIG. 5;
FIG. 10 is a schematic diagram of filling a groove with a second colloid according to some embodiments of the present application; and
FIG. 11 is a schematic exploded view of a battery according to still some other embodiments of the present application.

In the accompanying drawings, the figures are not drawn to actual scale.

Description of reference signs: 10: battery cell; 11: end cap; 12: electrode terminal; 20: housing; 21: first portion; 22: second portion; 23: accommodation cavity; 30: temperature sampling member; 31: first terminal; 32: second terminal; 40: circuit board; 41: first sampling wire harness; 42: second sampling wire harness; 43: third opening; 44: fourth opening; 50: electrical connecting member; 5111: first solder mark; 511: first exposed region; 51: first conductive member; 5211: second solder mark; 521: second exposed region; 52: second conductive member; 531: first opening; 532: second opening; 53: first insulating film; 54: second insulating film; 60: busbar member; 61: through hole; 64: clipping protrusion; 70: isolation plate; 80: heat conducting member; 90: bracket; 91: groove; 92: protrusion; 93: second colloid; 100: battery; 1000: vehicle; 200: controller; 300: motor; and X: first direction.

### DESCRIPTION OF EMBODIMENTS

In order to make the purpose, technical solutions and advantages of the embodiments of the present application clearer, the technical solutions in the embodiments of the present application will be clearly described hereinafter with reference to the accompanying drawings in the embodiments of the present application. Obviously, the described embodiments are part of the embodiments of the present application, not all of the embodiments. Based on the embodiments in the present application, all other embodiments obtained by those of ordinary skill in the art without undertaking inventive efforts fall within the scope of protection of the present application.

Unless otherwise defined, all technical and scientific terms adopted in the present application have the same meaning as those generally understood by those skilled in the technical field to which the present application belongs; the terms used in the specification of the present application are only for the purpose of describing specific embodiments and are not intended to limit the present application; and the terms "include" and "have" and any variations thereof in the specification and claims of the present application and the above drawings are intended to cover non-exclusive inclusions. The terms "first", "second", and the like in the specification and claims of the present application or the above drawings are used to distinguish different objects, and are not used to describe a specific order or priority relationship.

Reference to "embodiment" in the present application means that a particular feature, structure or characteristic described with reference to the embodiment may be incorporated into at least one embodiment of the present application. The appearance of the phrase in various positions in the specification does not necessarily refer to the same embodiment, nor does it denote an independent or alternative embodiment mutually exclusive of other embodiments.

In the description of the present application, it should be noted that, unless otherwise clearly specified and limited, the terms "mount", "connect", "link" and "attach" should be understood in a broad sense, for example, it may be a fixed connection, a detachable connection, or an integral connection; it may be a direct connection or an indirect connection through an intermediate medium, and it may be the internal communication of two elements. For those of ordinary skill in the art, the specific meanings of the above terms in the present application can be understood according to specific scenarios.

In the description of the present application, it should be noted that, unless otherwise stated, the meaning of "plurality" is two or more; the orientation or positional relationship indicated by the terms "upper", "lower", "left", "right", "inner", "outer", and the like is only for the convenience of describing the present application and simplifying the description, and does not indicate or imply that the device or element referred to must have a specific orientation, be constructed and operated in a specific orientation, and therefore shall not be understood as a limitation on the present application. In addition, the terms "first", "second", "third", and the like are used for descriptive purposes only and shall not be understood as indicating or implying relative importance. "Vertical" is not strictly vertical, but within a permissible error tolerance. "Parallel" is not strictly parallel, but within a permissible error tolerance.

The term "or" in the present application is only a description of the association relationship of associated objects, indicating that two relationships may exist. For example, A or B can mean: A exists alone, or B exists alone.

In the embodiments of the present application, the same reference numerals designate identical components. For brevity, detailed descriptions of the same components are omitted in different embodiments. It should be understood that the thickness, length, and width of various components in the embodiments of the present application shown in the accompanying drawings, as well as the overall thickness, length, and width of the integrated device, are provided solely for exemplary illustrations and shall not constitute any limitation on the present application.

The term "plurality" appearing in the present application refers to two or more (including two).

In the present application, the battery cell may include but is not limited to a lithium-ion secondary battery, a lithium-ion primary battery, a lithium sulfur battery, a sodium-lithium ion battery, a sodium-ion battery, or a magnesium-ion battery. The battery cell adopts various outer shapes including but not limited to cylinder, flat body, cuboid, or other shapes. Classified by packaging form, battery cells generally include cylindrical battery cells, square battery cells, and pouch battery cells.

The battery cell includes an electrode assembly and an electrolyte. The electrode assembly is composed of a positive electrode sheet, a negative electrode sheet, and a separator. The battery cell mainly operates mainly through migration of metal ions between the positive electrode sheet and the negative electrode sheet. Metal ions (such as lithium ions) intercalate and deintercalate back and forth between the positive electrode and the negative electrode. The separator is disposed between the positive electrode and the negative electrode. This arrangement may prevent the positive electrode sheet and the negative electrode sheet from short-circuiting, and also allow active ions to pass through.

The positive electrode sheet includes a positive electrode current collector and a positive electrode active material layer. The positive electrode active material layer is coated on a surface of the positive electrode current collector. The positive electrode current collector not coated with the positive electrode active material layer protrudes from the positive electrode current collector coated with the positive electrode active material layer. The positive electrode current collector not coated with the positive electrode active material layer serves as a positive electrode tab.

Taking a lithium ion battery as an example, the positive electrode active material may be lithium cobalt oxide, lithium iron phosphate, ternary lithium, lithium manganate, or the like. The positive electrode current collector may be a metal foil or a composite current collector. For example, as a metal foil, aluminum with silver-plated surface treatment, stainless steel with silver-plated surface treatment, stainless steel, copper, aluminum, nickel, carbon electrode, carbon, nickel, titanium, and the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, and polyethylene).

The negative electrode sheet includes a negative electrode current collector and a negative electrode active material layer. The negative electrode active material layer is coated on a surface of the negative electrode current collector. The negative electrode current collector not coated with the negative electrode active material layer protrudes from the negative electrode current collector coated with the negative electrode active material layer. The negative electrode current collector not coated with the negative electrode active material layer serves as a negative electrode tab.

The negative electrode current collector may be a metal foil or a composite current collector. For example, as a metal foil, aluminum with silver-plated surface treatment, stainless steel with silver-plated surface treatment, stainless steel, copper, aluminum, nickel, carbon electrode, carbon, nickel, titanium, and the like may be used. The negative electrode active material may be carbon, silicon, or the like.

In order to ensure that a large current passes without fusing, the number of positive electrode tabs is multiple and stacked together, and the negative electrode tab is provided in plurality and the plurality of negative electrode tabs are stacked together. The material of the separator may be PP (polypropylene, polypropylene), PE (polyethylene, polyethylene), or the like. In addition, the electrode assembly may be a wound structure or a laminated structure.

The battery mentioned in the embodiments of the present application refers to an independent physical module including one or more battery cells to provide higher voltage and capacity. For example, the battery mentioned in the present application may include a battery module, a battery pack, or the like. The battery generally includes a housing for packaging one or more battery cells. The housing may mitigate the influence of liquid or other foreign contaminants on the charging or discharging of the battery cells.

In some embodiments, the battery may be a battery module. When there are a plurality of battery cells, the plurality of battery cells are arranged and fixed to form a battery module.

In some embodiments, the battery may be a battery pack. The battery pack includes a housing and battery cells, and the battery cells or battery modules are accommodated in the housing.

In some embodiments, a plurality of battery cells (cell) may first be assembled into at least one battery module (module), and then the battery module is mounted in the housing to form a battery pack (pack). In this embodiment, auxiliary structural members such as cross beams may also be provided between the battery modules to enhance mounting stability of the battery modules in the housing.

In some embodiments, the housing may serve as a portion of the chassis structure of the vehicle. For example, a portion of the housing may constitute at least a portion of the floor of the vehicle, or a portion of the housing may constitute at least a portion of the cross beam and longitudinal beam of the vehicle.

In some embodiments, the battery may be an energy storage device. The energy storage device includes an energy storage container, an energy storage cabinet, or the like.

In a battery, a temperature sampling member is welded to a circuit board to achieve electrical connection. The temperature sampling member detects a temperature of a cell, and the circuit board transmits a temperature signal detected by the temperature sampling member to a battery management system to monitor the battery. As an electronic component, the temperature sampling member is subject to the assembly process and materials of electronic components. Soldering between the temperature sampling member and the circuit board is conventionally completed by reflow soldering.

Since a plurality of temperature sampling members usually need to be connected to the circuit board to arrange a plurality of temperature detection points for a corresponding group of battery cells, and the time required for the reflow soldering process is long, the time for the circuit board to pass through the reflow soldering furnace is long, resulting in low output of welding finished products of the circuit board and the temperature sampling member per unit time, slow production cycle, and low production efficiency of the battery.

In view of this, in order to address the problem of low battery production efficiency caused by the long time for the circuit board to pass through the reflow soldering furnace, the embodiments of the present application provide a battery. In the battery, an electrical connecting member is used as an adapter between the temperature sampling member and the circuit board. The electrical connecting member and the temperature sampling member are connected by reflow soldering to form a component, and then the electrical connecting member is connected to the circuit board.

By arranging the electrical connecting member to serve as an adapter, when a plurality of temperature sampling members need to be connected to the circuit board, a plurality of electrical connecting members may be used to form components with the plurality of temperature sampling members by reflow soldering in advance; then in the connection step between the circuit board and the temperature sampling member, the electrical connecting member is used to connect to the circuit board to form an adapter without using reflow soldering. The two steps may be carried out independently, and the reflow soldering process may be decoupled from the final assembly step of the circuit board and the temperature sampling member, which greatly improves the production efficiency of the battery.

The technical solutions disclosed in the embodiments of the present application are applicable to but not limited to batteries and electrical devices using batteries.

The electrical device may be a vehicle, a mobile phone, a portable device, a notebook computer, a watercraft, a spacecraft, an electric toy, an electric tool, and the like. The vehicle may be a fuel vehicle, a gas vehicle, or a new energy vehicle. The new energy vehicle may be a battery electric vehicle, a hybrid electric vehicle, an extended-range electric vehicle, or the like; the spacecraft includes airplanes, rockets, space shuttles, spacecraft, and the like; the electric toys include fixed or mobile electric toys, such as game consoles, electric car toys, electric boat toys, and electric airplane toys; and the electric tools include metal cutting electric tools, grinding electric tools, assembly electric tools, and railway electric tools, such as electric drills, angle grinders, electric wrenches, electric screwdrivers, electric hammers, impact drills, concrete vibrators, and electric planers.

The following embodiments are for the convenience of explanation, and the electrical device is taken as a vehicle as an example for explanation.

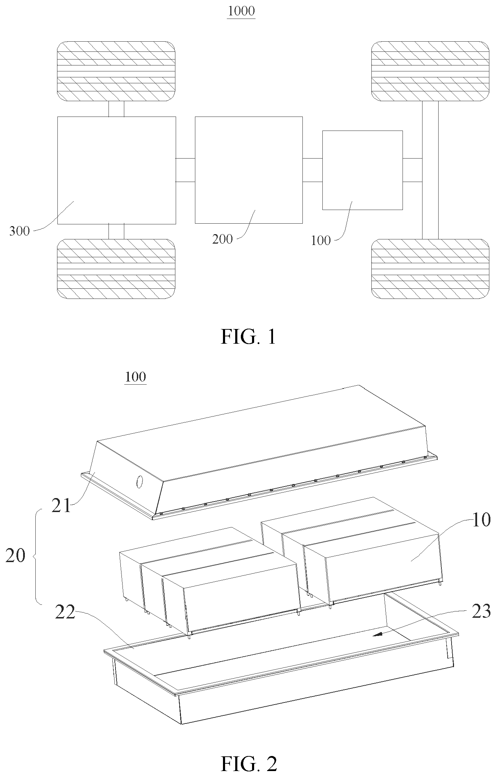

Referring to FIG. 1, FIG. 1 is a schematic structural diagram of a vehicle 1000 according to some embodiments of the present application. A battery 100 is provided inside the vehicle 1000, and the battery 100 may be provided at the bottom or front or rear of the vehicle 1000. The battery 100 may be used to supply power to the vehicle 1000. For example, the battery 100 may be used as an operating power source of the vehicle 1000.

The vehicle 1000 may further include a controller 200 and a motor 300. The controller 200 is configured to control the battery 100 to supply power to the motor 300, for example, to meet the operational power requirements during starting, navigation, and driving of the vehicle 1000.

In some embodiments of the present application, the battery 100 can not only be used as an operating power source of the vehicle 1000, but also as a traction power source of the vehicle 1000, replacing or partially replacing fuel or natural gas to provide driving power for the vehicle 1000.

In some embodiments, referring to FIG. 2, FIG. 2 is a schematic exploded view of a battery 100 according to some embodiments of the present application. The battery 100 includes a plurality of battery cells 10. The plurality of battery cells 10 may be connected in series or in parallel or in a hybrid connection. The hybrid connection means that there are both series and parallel connections in the plurality of battery cells 10.

In some embodiments, the battery 100 may further include a busbar member 60 (mentioned later), and the plurality of battery cells 10 may be electrically connected through the busbar member 60 to realize series connection or parallel connection or hybrid connection of the plurality of battery cells 10.

The busbar member 60 may be a metal conductor, such as copper, iron, aluminum, steel, or aluminum alloy.

In some embodiments, the battery 100 may further include a housing 20, and the housing 20 is configured to accommodate the battery cell 10. The housing 20 may include a first portion 21 and a second portion 22. The first portion 21 and the second portion 22 cover each other to define an accommodation cavity 23 for accommodating the battery cell 10. Certainly, the connection between the first portion 21 and the second portion 22 may be sealed by a sealing element (not shown in the figure), and the sealing element may be a sealing ring, sealant, or the like.

The first portion 21 and the second portion 22 may have various shapes, such as a cuboid d or a cylinder. The first portion 21 may be a hollow structure with one side open, and the second portion 22 may also be a hollow structure with one side open. The open side of the second portion 22 covers the open side of the first portion 21 to form the housing 20 with the accommodation cavity 23. Certainly, the first portion 21 may be a hollow structure with one side open, and the second portion 22 may be a plate-shaped structure. The second portion 22 covers the open side of the first portion 21 to form the housing 20 with the accommodation cavity 23.

The embodiments of the present application provide a battery 100, which can improve the production efficiency of the battery 100. The specific structure of the battery 100 is described in detail below with reference to the accompanying drawings.

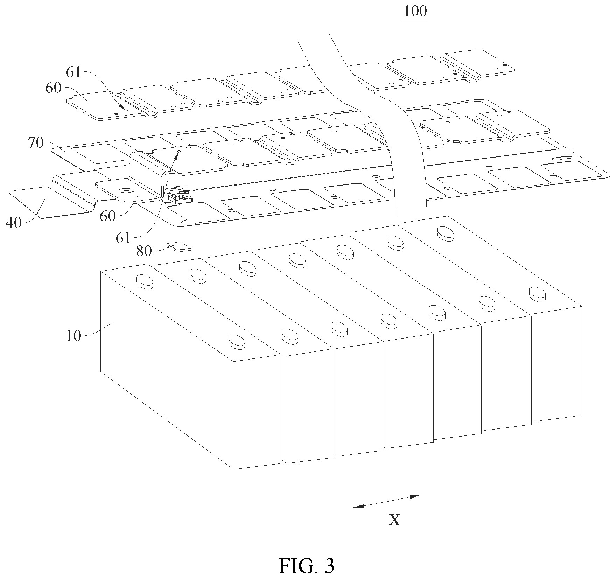

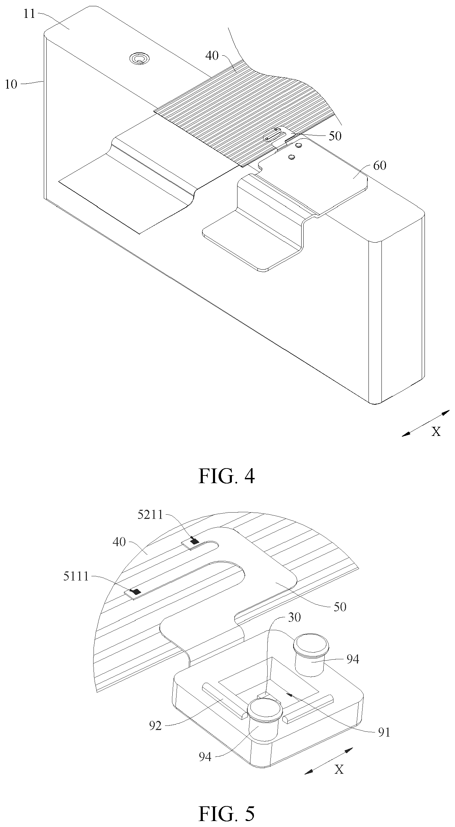

FIG. 3 is a schematic exploded view of a battery 100 according to some other embodiments of the present application; FIG. 4 is a schematic diagram of a partial structure of a battery 100 according to some embodiments of the present application; and FIG. 5 is a schematic structural diagram of a temperature sampling member 30 and a circuit board 40 separately welded to an electrical connecting member 50 according to some embodiments of the present application.

Referring to FIG. 3 to FIG. 5, the embodiments of the present application provide a battery 100, including a battery cell 10, a temperature sampling member 30, a circuit board 40, and an electrical connecting member 50. The temperature sampling member 30 is configured to detect a temperature of the battery cell 10; the electrical connecting member 50 is configured to electrically connect the temperature sampling member 30 to the circuit board 40, and the temperature sampling member 30 and the electrical connecting member 50 are connected by reflow soldering.

The battery cell 10 may include an end cap 11 and an electrode terminal 12, and the electrode terminal 12 may be disposed on the end cap 11. Other functional components, for example, a pressure relief mechanism (not shown in the figure), may also be provided on the end cap 11.

The circuit board 40 is one of the core components of the battery 100. In addition to the temperature sampling member 30, the circuit board 40 may also include a temperature sampling circuit, a voltage sampling circuit, and the like. The circuit board 40 may transmit a data signal detected by the temperature sampling member 30 to a battery 100 management system, thereby facilitating the management and monitoring of the battery 100.

The circuit board 40 may be a flexible circuit board. The flexible circuit board is a sheet-form electronic component using a polyimide film or a polyamide ester film as a substrate, where conductive traces are formed on a metal foil by chemical etching technology, and a protective layer is laminated on the surface.

The temperature sampling member 30 is a component for detecting a temperature of the battery cell 10. The temperature sampling member 30 may be in contact with the end cap 11 of the battery cell 10 to detect the temperature of the battery cell 10. Optionally, the temperature sampling member 30 is an NTC thermistor.

The electrical connecting member 50 is a component for realizing the electrical connection between the temperature sampling member 30 and the circuit board 40. The temperature sampling member 30 is electrically connected to the circuit board 40 to transmit temperature data signals.

The temperature sampling member 30 and the electrical connecting member 50 are connected by reflow soldering. Reflow soldering is a bonding process that relies on circulating high-temperature gas inside the reflow soldering furnace to achieve the purpose of welding. Specifically, solder paste may be preset as a welding point at an end of the electrical connecting member 50 that needs to be connected to the temperature sampling member. In the reflow soldering furnace, the solder joint between the temperature sampling member 30 and the electrical connecting member 50 is heated by hot air flow, so that the solder paste melts or fuses under a certain high-temperature air flow, thereby connecting the temperature sampling member 30 to the electrical connecting member 50. The reflow soldering furnace delivers high welding efficiency, and a plurality of temperature sampling members 30 and a plurality of electrical connecting members 50 may be correspondingly reflow soldered simultaneously to achieve mass production.

In the reflow soldering furnace, a heater and a fan may be used to heat and circulate the gas in the reflow soldering furnace, or infrared radiation and a fan can be used to heat and circulate the gas in the reflow soldering furnace. The reflow soldering furnace may include four temperature zones, namely a preheating zone, a ramp-up zone, a welding zone, and a cooling zone. The temperature sampling member 30 and the electrical connecting member 50 may travel these temperature zones in sequence through a conveyor belt. After the solder paste undergoes the steps of heating, melting, solidification, and cooling, the temperature sampling member 30 and the electrical connecting member 50 are welded together.

In this embodiment, by adding an electrical connecting member 50 as an adapter between the temperature sampling member 30 and the circuit board 40, the electrical connecting member 50 and the temperature sampling member 30 may be connected by reflow soldering in advance to form a component. When a plurality of temperature sampling members 30 need to be connected to the circuit board 40, a plurality of electrical connecting members 50 and a plurality of temperature sampling members 30 may form a plurality of components by reflow soldering in advance, and then the electrical connecting member 50 is connected to the circuit board 40 to realize the electrical connection between the temperature sampling member 30 and the circuit board 40. This allows the reflow soldering step to be decoupled from the step of connecting the circuit board 40 and the temperature sampling member 30, shortens the overall production cycle, and greatly improves the production efficiency of the battery 100.

It should be noted that the decoupling of the reflow soldering step from the step of connecting the circuit board 40 and the temperature sampling member 30 means that, by adding an electrical connecting member 50 as an adapter between the temperature sampling member 30 and the circuit board 40, the temperature sampling member 30 may be connected to the electrical connecting member 50 by reflow soldering to form a unit component for pre-production. The pre-produced unit component may be used to connect to the circuit board 40 through the electrical connecting member 50. Especially under a condition that temperature sampling members 30 need to be mounted on the circuit board 40, the process of connecting the temperature sampling member 30 to the electrical connecting member 50 by reflow soldering and the process of connecting the electrical connecting member 50 to the circuit board 40 may be carried out in parallel, thereby shortening the production time and shortening the production time.

In addition, the circuit board 40 and the electrical connecting member 50 may be connected by laser welding or a more efficient connection method.

In some embodiments, the electrical connecting member 50 may also be a flexible circuit board.

The flexible circuit board is a highly reliable and excellent flexible circuit board made of polyimide or polyester film as a substrate. The flexible circuit board has the characteristics of high wiring density, light weight, and small thickness. In this embodiment, the electrical connecting member 50 is a flexible circuit board, which simplifies the preparation of the electrical connecting member 50.

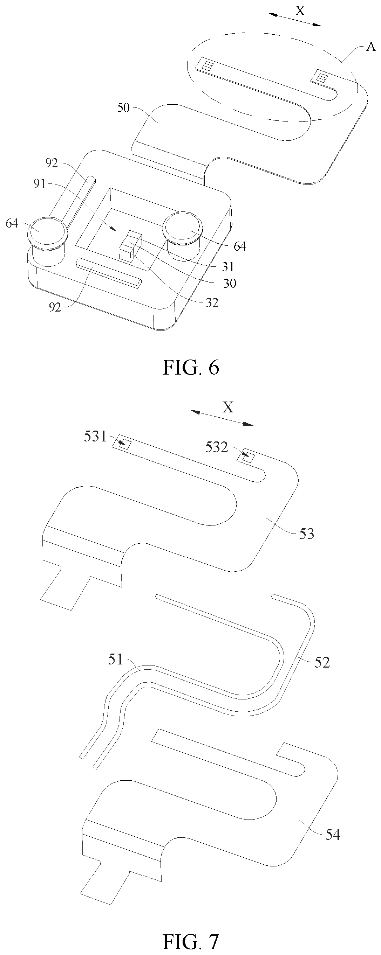

FIG. 6 is a schematic structural diagram of a temperature sampling member 30 and an electrical connecting member 50 according to some embodiments of the present application; and FIG. 7 is a schematic exploded view of an electrical connecting member 50 according to some embodiments of the present application.

Referring to FIG. 6 and FIG. 7, and with reference to FIG. 5, in some embodiments, the temperature sampling member 30 is provided with a first terminal 31 and a second terminal 32. The flexible circuit board includes a first conductive member 51, a second conductive member 52, a first insulating film 53, and a second insulating film 54. The first insulating film 53 and the second insulating film 54 are stacked, and the first conductive member 51 and the second conductive member 52 are disposed between the first insulating film 53 and the second insulating film 54. One end of the first conductive member 51 is welded to the circuit board 40, and another end is connected to the first terminal 31 by reflow soldering. One end of the second conductive member 52 is welded to the circuit board 40, and another end is connected to the second terminal 32 by reflow soldering.

The first conductive member 51 is a component that realizes the electrical connection between the first terminal 31 and the circuit board 40. The shape of the first conductive member 51 may be arranged as needed, as long as the electrical connection between the first terminal 31 and the circuit board 40 can be realized. The second conductive member 52 is a component that realizes the electrical connection between the second terminal 32 and the circuit board 40. The shape of the second conductive member 52 may be arranged as needed, as long as the electrical connection between the second terminal 32 and the circuit board 40 can be realized. Optionally, both the first conductive member 51 and the second conductive member 52 are configured as curved strip structures.

When the electrical connecting member 50 is a flexible circuit board, the first conductive member 51 and the second conductive member 52 may be conductive traces manufactured on a metal foil. The first insulating film 53 and the second insulating film 54 are components covering the outer periphery of the first conductive member 51 and the second conductive member 52. The first insulating film 53 and the second insulating film 54 isolate the first conductive member 51 and the second conductive member 52 from the outside. The shapes of the first insulating film 53 and the second insulating film 54 may be various. The first insulating film 53 and the second insulating film 54 may be provided separately or integrally formed.

In this embodiment, the first insulating film 53 and the second insulating film 54 wrap the first conductive member 51 and the second conductive member 52, which may reduce the risk of short circuit of the battery 100.

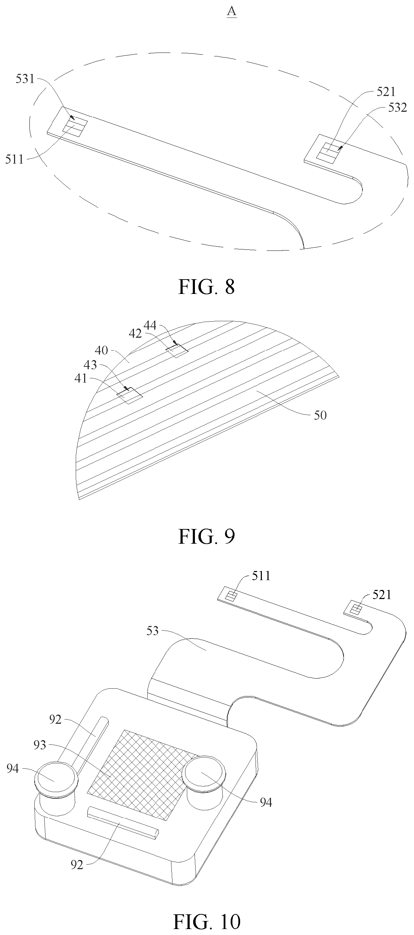

FIG. 8 is an enlarged view of part A in FIG. 6.

Referring to FIG. 7, FIG. 6, and FIG. 8, in some embodiments, the first insulating film 53 is provided with a first opening 531 and a second opening 532, the first conductive member 51 is provided with a first exposed region 511 exposed through the first opening 531, and the first exposed region 511 is welded to the circuit board 40; and the second conductive member 52 is provided with a second exposed region 521 exposed through the second opening 532, and the second exposed region 521 is welded to the circuit board 40.

The first exposed region 511 is a region of the first conductive member 51 that is not covered by the first insulating film 53, and the second exposed region 521 is a region of the second conductive member 52 that is not covered by the second insulating film 54.

Specifically, referring to FIG. 9, FIG. 9 is a schematic structural diagram of the circuit board 40 in FIG. 5. The circuit board 40 includes a first sampling wire harness 41 and a second sampling wire harness 42. The outer periphery of the first sampling wire harness 41 and the second sampling wire harness 42 may be covered with an insulating film. The insulating film is provided with a third opening 43 and a fourth opening 44. The third opening 43 exposes positions corresponding to the first sampling wire harness 41 and the first exposed region 511, and exposes positions corresponding to the second sampling wire harness 42 and the second exposed region 521. This facilitates the welding of the first exposed region 511 to the first sampling wire harness 41 and the welding of the second exposed region 521 to the second sampling wire harness 42.

That is, one end of the first conductive member 51 is welded to the first terminal 31 of the temperature sampling member 30, another end of the first conductive member 51 is welded to the first sampling wire harness 41 via the first exposed region 511, and the first conductive member 51 electrically connects the first terminal 31 to the first sampling wire harness 41. One end of the second conductive member 52 is welded to the second terminal 32 of the temperature sampling member 30, another end of the second conductive member 52 is welded to the second sampling wire harness 42 via the second exposed region 521, and the second conductive member 52 electrically connects the second terminal 32 to the second sampling wire harness 42.

In this embodiment, the first opening 531 arranged on the first insulating film 53 facilitates welding of the first conductive member 51 to the circuit board 40 via the first exposed region 511, and the second opening 532 arranged on the first insulating film 53 facilitates welding of the second conductive member 52 to the circuit board 40 via the second exposed region 521.

In order to reduce the risk of short circuit between the first exposed region 511 and the second exposed region, in some embodiments, along the first direction X, the end of the first conductive member 51 having the first exposed region 511 extends beyond the end of the second conductive member 52 having the second exposed region 521.

Optionally, the first direction X is parallel to an arrangement direction of the plurality of battery cells 10.

Referring to FIG. 5, in some embodiments, the first conductive member 51 and the circuit board 40 are welded to form a first solder mark 5111, the second conductive member 52 and the circuit board 40 are welded to form a second solder mark 5211, and both the first solder mark 5111 and the second solder mark 5211 are coated with a first colloid.

The first colloid has a sealing function, and the first colloid may isolate the first solder mark 5111 and the second solder mark 5211 from the outside. The material of the first colloid includes but is not limited to red glue, hot melt glue, and sealant.

In this embodiment, both the first solder mark 5111 and the second solder mark 5211 are coated with a first colloid, which may lower the risk that liquid or foreign contaminants interfere with the welding position and result in temperature sampling failure.

Referring to FIG. 4, FIG. 5, and FIG. 6, in some embodiments, the battery 100 further includes a busbar member 60 and a bracket 90. The busbar member 60 is configured to realize electrical connection among a plurality of battery cells 10. The bracket 90 is an insulating member, and the bracket 90 is mounted on the busbar member 60. The temperature sampling member 30 is fixed to the bracket 90.

The busbar member 60 may be connected to the electrode terminal 12 of the battery cell 10, thereby realizing series connection, parallel connection, or hybrid connection of a plurality of battery cells 10. The material of the busbar member 60 includes but is not limited to copper and aluminum. Optionally, the busbar member 60 is an aluminum busbar.

The bracket 90 is mounted on the busbar member 60, and the bracket 90 may be mounted on the busbar member 60 by snapping, riveting, or the like.

The material of the bracket 90 includes but is not limited to polyurethane and rubber. The bracket 90 may adopt various profiles such as circular, oval, rectangular and irregular shapes. Optionally, the bracket 90 is rectangular.

The temperature sampling member 30 is fixed to the bracket 90. The bracket 90 serves as a mounting base of the temperature sampling member 30, and the temperature sampling member 30 may be bonded to the bracket 90.

In this embodiment, the temperature sampling member 30 is fixed to the bracket 90, and the bracket 90 is mounted on the busbar member 60, which is beneficial for the busbar member 60 to fix the bracket 90, thereby stabilizing the temperature of the temperature sampling member 30, lowering the risk of displacement of the temperature sampling member 30, and improving the sampling quality of the temperature sampling member 30.

In some embodiments, the bracket 90 is riveted to the busbar member 60, that is, the bracket 90 and the busbar member 60 are fixed together by riveting. The riveting of the bracket 90 and the busbar member 60 facilitates the assembly of the bracket 90 and the busbar member 60, and the connection between the bracket 90 and the busbar member 60 is highly stable.

In some embodiments, referring to FIG. 5 and FIG. 6, a clipping protrusion 64 is provided on a side of the bracket 90 facing the busbar member 60, and the busbar member 60 is provided with a through hole 61 (as shown in FIG. 3) corresponding to the clipping protrusion 64. The clipping protrusion 64 is clipped into the through hole 61, so that the bracket 90 is mounted on the busbar member 60. Optionally, the bracket 90 is provided with two clipping protrusions 64.

Referring to FIG. 5 and FIG. 6, in some embodiments, a protrusion 92 is provided on a side of the bracket 90 facing the busbar member 60, and the bracket 90 abuts against the busbar member 60 through the protrusion 92.

The protrusion 92 is a component that separates the bracket 90 from the busbar member 60. The structure of the protrusion 92 includes but is not limited to bumps, raised strips, raised columns, or combinations thereof. One or more protrusions 92 may be provided. For example, in FIG. 5 and FIG. 6, the protrusion 92 is a raised strip, two raised strips are provided, and extension directions of the two raised strips are perpendicular to each other.

In this embodiment, the protrusion 92 may reduce the contact area between the bracket 90 and the busbar member 60 and mitigate the influence of the temperature of the busbar member 60 on the temperature sampling member 30.

In some embodiments, the bracket 90 is injection-molded at an end of the electrical connecting member 50 where the temperature sampling member 30 is disposed.

Optionally, the bracket 90 is an injection-molded plate.

The bracket 90 is injection-molded at an end of the electrical connecting member 50 where the temperature sampling member 30 is disposed, which facilitates the connection between the electrical connecting member 50 and the bracket 90.

In some embodiments, a groove 91 is formed on a side of the bracket 90 facing the busbar member 60, and at least a portion of the temperature sampling member 30 is accommodated in the groove 91.

The groove 91 may be configured as a rectangle, a circle, an oval, or the like. Optionally, the groove 91 is a rectangular groove. Under a condition that the bracket 90 is provided with a plurality of protrusions 92, the protrusions 92 may be arranged at intervals along the outer periphery of the groove 91.

At least a portion of the temperature sampling member 30 is accommodated in the groove 91. This may reduce the protruding dimension of the temperature sampling member 30 relative to the bracket 90 and minimize the overall space occupied by the temperature sampling member 30 and the bracket 90. In addition, this may reduce the contact between the temperature sampling member 30 and the busbar member 60, so as to lower the risk that the temperature of the busbar member 60 interferes with the temperature sampling member 30 and generates inaccurate detected temperature data of the battery cell 10.

FIG. 10 is a schematic diagram of filling the groove 91 with a second colloid 93 according to some embodiments of the present application.

Referring to FIG. 10, in some embodiments, the battery 100 further includes a second colloid 93, and the second colloid 93 fills the groove 91 and covers the temperature sampling member 30.

The second colloid 93 is configured to isolate the temperature sampling member 30 from the outside. The second colloid 93 covering the temperature sampling member 30 means that the temperature sampling member 30 is not exposed under a condition that the temperature sampling member 30 is covered by the second colloid 93. The second colloid 93 may just fill the groove 91, or the second colloid 93 may only fill a portion of the groove 91, as long as it covers the temperature sampling member 30.

The material of the first colloid includes but is not limited to red glue, hot melt glue, and sealant.

In this embodiment, the second colloid 93 seals the temperature sampling member 30, which may lower the risk that liquid or foreign contaminants interfere with the temperature sampling member 30 and cause the temperature sampling member 30 to fail to collect the temperature of the battery cell 10.

In some embodiments, the bracket 90 is disposed between the battery cell 10 and the busbar member 60.

The bracket 90 is disposed between the battery cell 10 and the busbar member 60, so that the busbar member 60 can press against the bracket 90 to restrain the displacement of the bracket 90, thereby lowering the risk of sampling failure resulting from the displacement of the temperature sampling member 30.

In some embodiments, the battery 100 further includes a bracket 90, the temperature sampling member 30 is fixed to the bracket 90, the bracket 90 is an injection-molded plate and is located at an end of the electrical connecting member 50 where the temperature sampling member 30 is disposed.

In this embodiment, the temperature sampling member 30 is fixed to the bracket 90, and the bracket 90 is mounted on the electrical connecting member 50, which is beneficial for the electrical connecting member 50 to fix the bracket 90, thereby stabilizing the temperature of the temperature sampling member 30, lowering the risk of displacement of the temperature sampling member 30, and improving the sampling quality of the temperature sampling member 30.

In some embodiments, the bracket 90 further includes a groove 91, and at least a portion of the temperature sampling member 30 is accommodated in the groove 91.

In this embodiment, at least a portion of the temperature sampling member 30 is accommodated in the groove 91, which may reduce the protruding dimension of the temperature sampling member 30 relative to the bracket 90 and minimize the overall space occupied by the temperature sampling member 30 and the bracket 90.

In some embodiments, the battery 100 further includes a second colloid 93, and the second colloid 93 fills the groove 91 and covers the temperature sampling member 30.

In this embodiment, the second colloid 93 seals the temperature sampling member 30, which may lower the risk that liquid or foreign contaminants interfere with the temperature sampling member 30 and cause the temperature sampling member 30 to fail to collect the temperature of the battery 100 cell 10. Referring to FIG. 3, in some embodiments, the battery 100 further includes a heat conducting member 80, and the heat conducting member 80 is disposed between the bracket 90 and the battery cell 10.

The heat conducting member 80 is a component for improving the heat transfer efficiency between the battery cell 10 and the temperature sampling member 30. The heat conducting member 80 is made of a heat conducting material. The material of the heat conducting member 80 includes but is not limited to thermally conductive silicone and thermally conductive silicone grease. The thermally conductive silicone and thermally conductive silicone grease have insulating properties and can lower the risk of short circuit of the battery 100.

In this embodiment, the heat conducting member 80 transfers heat between the battery cell 10 and the temperature sampling member 30. The heat conducting member 80 features high thermal conductivity, which may boost the heat transfer efficiency between the battery cell 10 and the temperature sampling member 30 and raise the accuracy of the data detected by the temperature sampling member 30.

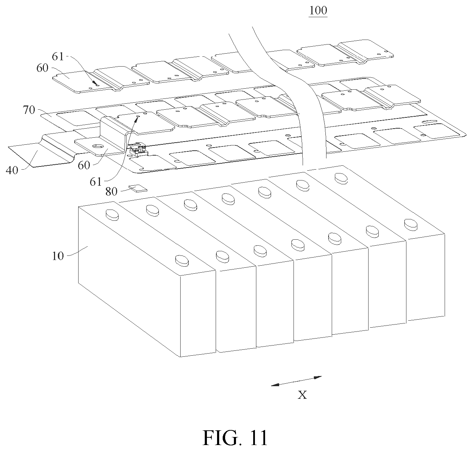

FIG. 11 is a schematic exploded view of a battery 100 according to still some other embodiments of the present application. Referring to FIG. 11, in some embodiments, the battery 100 further includes an isolation plate 70. The isolation plate 70 is disposed between the busbar member 60 and the battery cell 10. The isolation plate 70 is an insulating member. The bracket 90 is disposed between the isolation plate 70 and the busbar member 60, and the heat conducting member 80 is disposed between the battery cell 10 and the isolation plate 70.

Optionally, the isolation plate 70 is a plastic plate.

The embodiments of the present application further provide an electrical device. The electrical device includes the battery 100 provided in the embodiments of the first aspect, and the battery 100 is configured to supply power to the electrical device.

The embodiments of the present application further provide a battery 100. The battery 100 includes a battery cell 10, a temperature sampling member 30, a circuit board 40, an electrical connecting member 50, a busbar member 60, a bracket 90, a first colloid, and a second colloid 93. The circuit board 40 includes a first sampling wire harness 41 and a second sampling wire harness 42. The temperature sampling member 30 is configured to detect a temperature of the battery cell 10. The temperature sampling member 30 is provided with a first terminal 31 and a second terminal 32. The electrical connecting member 50 is configured to electrically connect the temperature sampling member 30 to the circuit board 40. The temperature sampling member 30 and the circuit board 40 are each welded to the electrical connecting member 50. The electrical connecting member 50 is a flexible circuit board. The flexible circuit board includes a first conductive member 51, a second conductive member 52, a first insulating film 53, and a second insulating film 54. The first insulating film 53 and the second insulating film 54 are stacked. The first conductive member 51 and the second conductive member 52 are disposed between the first insulating film 53 and the second insulating film 54. One end of the first conductive member 51 is welded to the first sampling wire harness 41, and another end is welded to the first terminal 31. One end of the second conductive member 52 is welded to the second sampling wire harness 42, and another end is welded to the second terminal 32. The first insulating film 53 is provided with a first opening 531 and a second opening 532. The first conductive member 51 is provided with a first exposed region 511 exposed through the first opening 531, and the first exposed region 511 is welded to the first sampling wire harness 41; and the second conductive member 52 is provided with a second exposed region 521 exposed through the second opening 532, and the second exposed region 521 is welded to the second sampling wire harness 42. The first exposed region 511 and the first sampling wire harness 41 are welded to form a first solder mark 5111, and the second exposed region 521 and the second sampling wire harness 42 are welded to form a second solder mark 5211. Both the first solder mark 5111 and the second solder mark 5211 are coated with a first colloid. The busbar member 60 is configured to realize electrical connection among a plurality of battery cells 10. The bracket 90 is an insulating member. The bracket 90 is mounted on the busbar member 60. The bracket 90 is disposed between the battery cell 10 and the busbar member 60. The temperature sampling member 30 is fixed to the bracket 90. The bracket 90 is provided with a clipping protrusion 64, the busbar member 60 is provided with a through hole 61, and the clipping protrusion 64 is clipped into the through hole 61. A protrusion 92 is provided on a side of the bracket 90 facing the busbar member 60, and the bracket 90 abuts against the busbar member 60 through the protrusion 92. The bracket 90 is injection-molded at an end of the electrical connecting member 50 where the temperature sampling member 30 is disposed. A groove 91 is formed on a side of the bracket 90 facing the busbar member 60. The temperature sampling member 30 is accommodated in the groove 91. The second colloid 93 fills the groove 91 and covers the temperature sampling member 30. A heat conducting member 80 is provided, and the heat conducting member 80 is disposed between the bracket 90 and the battery cell 10.

The embodiments of the present application further provide a battery 100. The battery 100 includes a battery cell 10, a temperature sampling member 30, a circuit board 40, an electrical connecting member 50, a bracket 90, a first colloid, and a second colloid 93. The circuit board 40 includes a first sampling wire harness 41 and a second sampling wire harness 42. The temperature sampling member 30 is configured to detect a temperature of the battery cell 10. The temperature sampling member 30 is provided with a first terminal 31 and a second terminal 32. The electrical connecting member 50 is configured to electrically connect the temperature sampling member 30 to the circuit board 40. The temperature sampling member 30 and the circuit board 40 are each welded to the electrical connecting member 50. The electrical connecting member 50 is a flexible circuit board. The flexible circuit board includes a first conductive member 51, a second conductive member 52, a first insulating film 53, and a second insulating film 54. The first insulating film 53 and the second insulating film 54 are stacked. The first conductive member 51 and the second conductive member 52 are disposed between the first insulating film 53 and the second insulating film 54. One end of the first conductive member 51 is welded to the first sampling wire harness 41, and another end is welded to the first terminal 31. One end of the second conductive member 52 is welded to the second sampling wire harness 42, and another end is welded to the second terminal 32. The first insulating film 53 is provided with a first opening 531 and a second opening 532. The first conductive member 51 is provided with a first exposed region 511 exposed through the first opening 531, and the first exposed region 511 is welded to the first sampling wire harness 41; and the second conductive member 52 is provided with a second exposed region 521 exposed through the second opening 532, and the second exposed region 521 is welded to the second sampling wire harness 42. The first exposed region 511 and the first sampling wire harness 41 are welded to form a first solder mark 5111, and the second exposed region 521 and the second sampling wire harness 42 are welded to form a second solder mark 5211. Both the first solder mark 5111 and the second solder mark 5211 are coated with a first colloid. The temperature sampling member 30 is fixed to the bracket 90. The bracket 90 is an injection-molded plate and is located at one end of the electrical connecting member 50 where the temperature sampling member 30 is disposed. The bracket 90 further includes a groove 91, and at least a portion of the temperature sampling member 30 is accommodated in the groove 91. The second colloid 93 fills the groove 91 and covers the temperature sampling member 30. A heat conducting member 80 is provided, and the heat conducting member 80 is disposed between the bracket 90 and the battery cell 10.

It should be noted that, in the case of no conflict, the embodiments in the present application and the features in the embodiments may be combined with each other.

The above embodiments are only used to illustrate the technical solutions of the present application and are not intended to limit the present application. For those skilled in the art, the present application may have various modifications and changes. Any modifications, equivalent replacements, improvements, and the like made within the spirit and principles of the present application shall be included in the protection scope of the present application.

## Claims

1. A battery, comprising:
a battery cell;
a temperature sampling member configured to detect a temperature of the battery cell; and
a circuit board;
wherein the battery further comprises an electrical connecting member, the electrical connecting member is configured to electrically connect the temperature sampling member to the circuit board, and the temperature sampling member is connected to the electrical connecting member by reflow soldering.

2. The battery according to claim 1, wherein the electrical connecting member is a flexible circuit board.

3. The battery according to claim 2, wherein the temperature sampling member is provided with a first terminal and a second terminal; and
the flexible circuit board comprises a first conductive member, a second conductive member, a first insulating film, and a second insulating film, wherein the first insulating film and the second insulating film are stacked, the first conductive member and the second conductive member are disposed between the first insulating film and the second insulating film, one end of the first conductive member is welded to the circuit board, and another end is connected to the first terminal by reflow soldering; and one end of the second conductive member is welded to the circuit board, and another end is connected to the second terminal by reflow soldering.

4. The battery according to claim 3, wherein the first insulating film is provided with a first opening and a second opening, the first conductive member is provided with a first exposed region exposed through the first opening, and the first exposed region is welded to the circuit board; and the second conductive member is provided with a second exposed region exposed through the second opening, and the second exposed region is welded to the circuit board.

5. The battery according to claim 3 or 4, wherein the first conductive member and the circuit board are welded to form a first solder mark, the second conductive member and the circuit board are welded to form a second solder mark, and both the first solder mark and the second solder mark are coated with a first colloid.

6. The battery according to any one of claims 1 to 4, wherein the battery further comprises:
a busbar member configured to realize electrical connection among a plurality of battery cells; and
a bracket, the bracket being an insulating member, and the bracket being mounted on the busbar member;
wherein the temperature sampling member is fixed to the bracket.

7. The battery according to claim 6, wherein the bracket is riveted to the busbar member.

8. The battery according to claim 6 or 7, wherein a protrusion is provided on a side of the bracket facing the busbar member, and the bracket abuts against the busbar member through the protrusion.

9. The battery according to any one of claims 6 to 8, wherein the bracket is injection-molded at an end of the electrical connecting member where the temperature sampling member is disposed.

10. The battery according to any one of claims 6 to 9, wherein a groove is formed on a side of the bracket facing the busbar member, and at least a portion of the temperature sampling member is accommodated in the groove.

11. The battery according to claim 10, wherein the battery further comprises a second colloid, and the second colloid fills the groove and covers the temperature sampling member.

12. The battery according to any one of claims 6 to 11, wherein the bracket is disposed between the battery cell and the busbar member.

13. The battery according to any one of claims 1 to 4, wherein the battery further comprises a bracket, the temperature sampling member is fixed to the bracket, the bracket is an injection-molded plate and is located at an end of the electrical connecting member where the temperature sampling member is disposed.

14. The battery according to claim 13, wherein the bracket further comprises a groove, and at least a portion of the temperature sampling member is accommodated in the groove.

15. The battery according to claim 14, wherein the battery further comprises a second colloid, and the second colloid fills the groove and covers the temperature sampling member.
13. The battery according to any one of claims 1 to 12, wherein the battery further comprises:
a bracket, the temperature sampling member being fixed to the bracket; and
a heat conducting member, the heat conducting member being disposed between the bracket and the battery cell.
14.An electrical device, comprising the battery according to any one of claims 1 to 13, wherein the battery is configured to supply power to the electrical device.
